# EUROPEAN PATENT APPLICATION

(11) **EP 2 902 305 A1**
(43) Date of publication of application: **05.08.2015**
(21) Application number: 14196210.0
(22) Date of filing: 04.12.2014
(51) Int. Cl.: B62K 15/00

(54) **Folding vehicle**

(30) Priority: 29.01.2014 TW 103103633; 31.07.2014 TW 103213553 U
(71) Applicant: Wang, Yao-Chin, Taichung City (TW)
(72) Inventor: Wang, Yao-Chin, Taichung City (TW); Wang, Shuo-Feng, Taichung City (TW)
(74) Representative: Viering, Jentschura & Partner Patent- und Rechtsanwälte

(57) **Abstract**

A folding vehicle (10, 10a, 10b) includes first and second front frame extension sections (211, 212) pivotal about a first pivot axis (215, 215a, 215b). A head tube (25) spaces from the first pivot axis at a first distance (L). A front rolling device (40) is pivotal about a second pivot axis (41) and has a radius (R). The first distance (L) is smaller than the radius (R). A rear rolling device (50, 50a, 50b) is pivotal about a third pivot axis (51). The front frame extension in a folded position thereof includes the first, second and third pivot axes not aligned with one another, and the second and third pivot axes disposed on a phantom plane (P), as well as the first pivot axis offsetting from the phantom plane and disposed on a first side of the phantom plane that is adjacent to the second front frame extension section.

## Description

### Background of the Invention

### 1. Field of the Invention

The present invention relates to a folding vehicle and, particularly, to a folding vehicle that can fold down easily and quickly that can be transported easily and stably.

### 2. Description of the Related Art

TW Pat. No. M464387 shows a folding vehicle including a foldable front frame extension. By folding the front frame extension, the folding vehicle can fold into a compact form that a length between front and rear rolling devices is reduced and that the front and rear rolling devices are disposed abreast with one another. Therefore, the folding vehicle in the compact form has a reduced length size, but an increased width size. Unfortunately, the folding vehicle can be too wide to transport. In addition, it is desirable to allow a user to tow the folding vehicle stably while transporting it.

The present invention is, therefore, intended to obviate or at least alleviate the problems encountered in the prior art.

### Summary of the Invention

According to the present invention, a folding vehicle has folded and unfolded positions. The folding vehicle includes a frame including a front frame extension, a rear frame extension, a seat tube, and a head tube. The front frame extension has a folded and an unfolded positions and includes a first front frame extension section and a second front frame extension section pivotally connecting to the first front frame extension section. The first and second front frame extension sections are pivotal about a first pivot axis. The head tube extends from the first front frame extension section and spaces from the first pivot axis at a first distance. The rear frame extension extends from the second front frame extension section. A steering mechanism pivotally connects to the head tube. The steering mechanism includes a rolling device connecting structure and a steering handle. A seat pivotally connects to the seat tube. A front rolling device pivotally connects to the rolling device connecting structure and is pivotal about a second pivot axis. The front rolling device has a radius. The first distance is smaller than the radius. A rear rolling device pivotally connects to the rear frame extension and is pivotal about a third pivot axis.

The front frame extension in the folded position thereof includes the first, second and third pivot axes not aligned with one another, and the second and third pivot axes disposed on a phantom plane, as well as the first pivot axis offsetting from the phantom plane and disposed on a first side of the phantom plane that is adjacent to the second front frame extension section and distal to the head tube which is disposed on a second side of the phantom plane which is opposite to the first side.

It is therefore an object of the present invention to provide a folding vehicle that can fold down easily and quickly that can be transported easily and stably.

Other objectives, advantages, and new features of the present invention will become apparent from the following detailed description of the invention when considered in conjunction with the accompanied drawings.

### Brief Description of the Drawings

Fig. 1 is a perspective view of a folding vehicle in accordance with a first embodiment of the present invention.
Fig. 2 is a side view of the folding vehicle of the first embodiment of the present invention.
Fig. 3 is a perspective view, illustrating handlebars of the folding vehicle of the first embodiment of the present invention in a folded position.
Fig. 4 is a side view, illustrating front frame extension of the folding vehicle of the first embodiment of the present invention in a folded operation.
Fig. 5 is a side view, illustrating the front frame extension of the folding vehicle of the first embodiment of the present invention in a folded position.
Fig. 6 is a side view of the folding vehicle of the first embodiment of the present invention, illustrating seat tube in a folded position.
Fig. 7 is a perspective view, illustrating the folding vehicle of the first embodiment of the present invention in the folded position.
Fig. 8 is a side view, illustrating a user can stably tow the fold vehicle of the first embodiment of the present invention when transporting it.
Fig. 9 is a perspective view of a folding vehicle in accordance with a second embodiment of the present invention.
Fig. 10 is a side view of the folding vehicle of the second embodiment of the present invention.
Fig. 11 is a side view, illustrating the folding vehicle of the second embodiment of the present invention in a folded position.
Fig. 12 is a side view, illustrating a user can stably tow the fold vehicle of the second embodiment of the present invention when transporting it.
Fig. 13 is a perspective view of a folding vehicle in accordance with a third embodiment of the present invention.
Fig. 14 is a side view of the folding vehicle of the third embodiment of the present invention.
Fig. 15 is a side view, illustrating the folding vehicle of the third embodiment of the present invention in a folded position.

### Detailed Description of the Invention

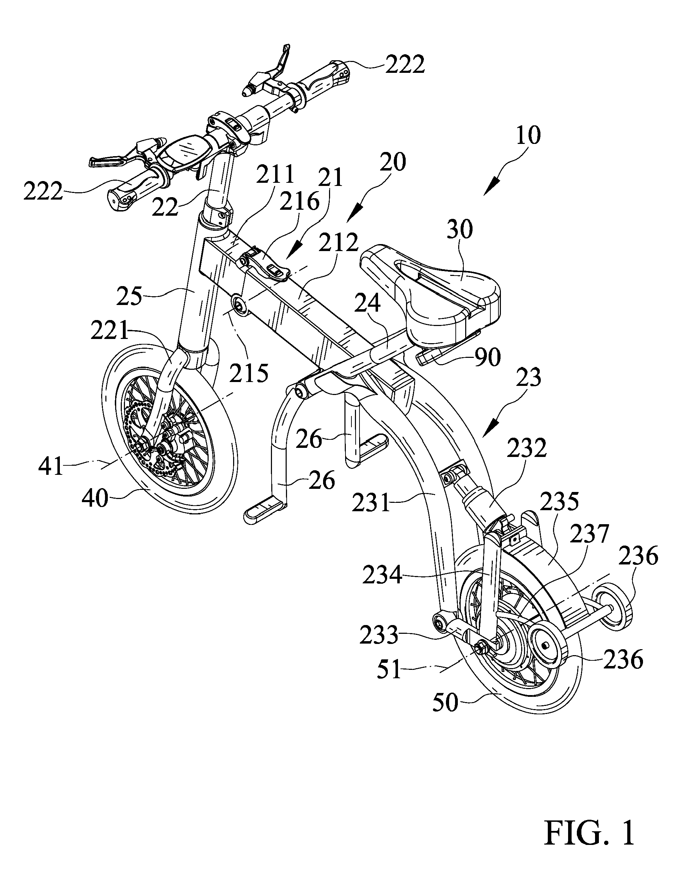

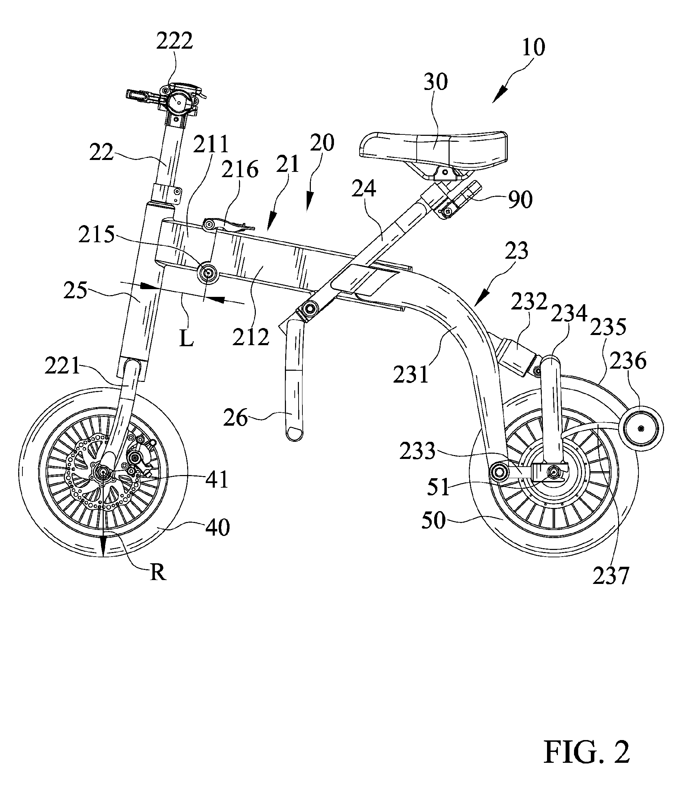

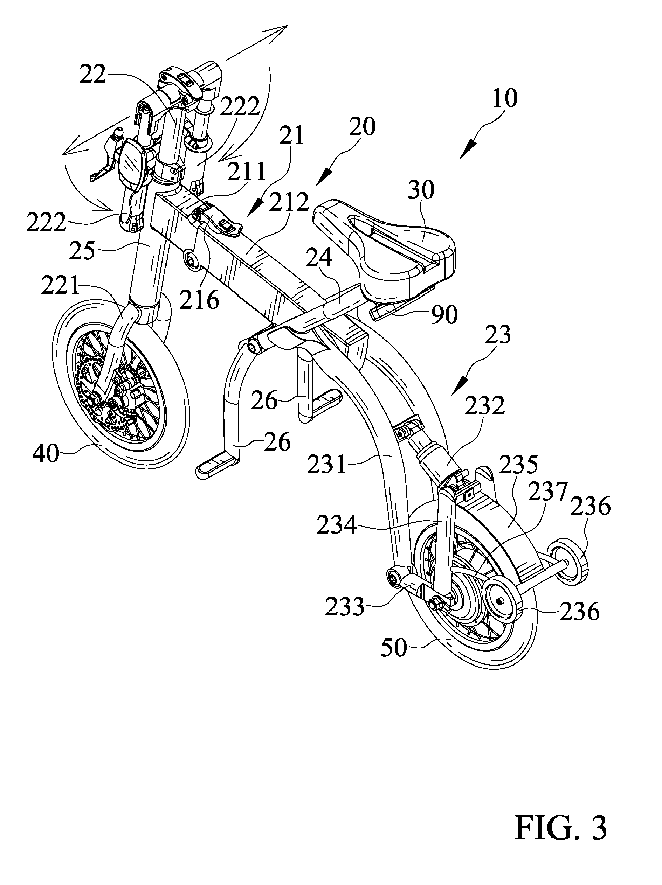

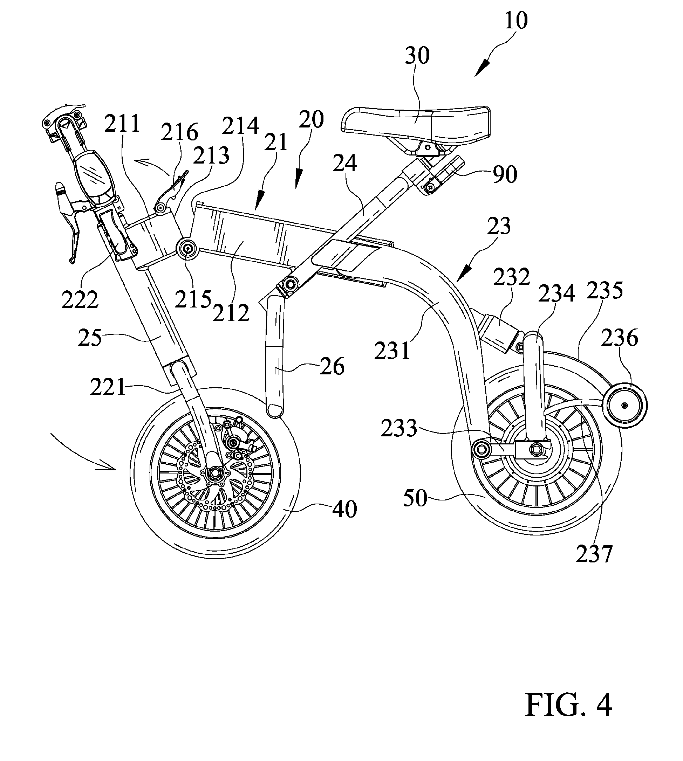

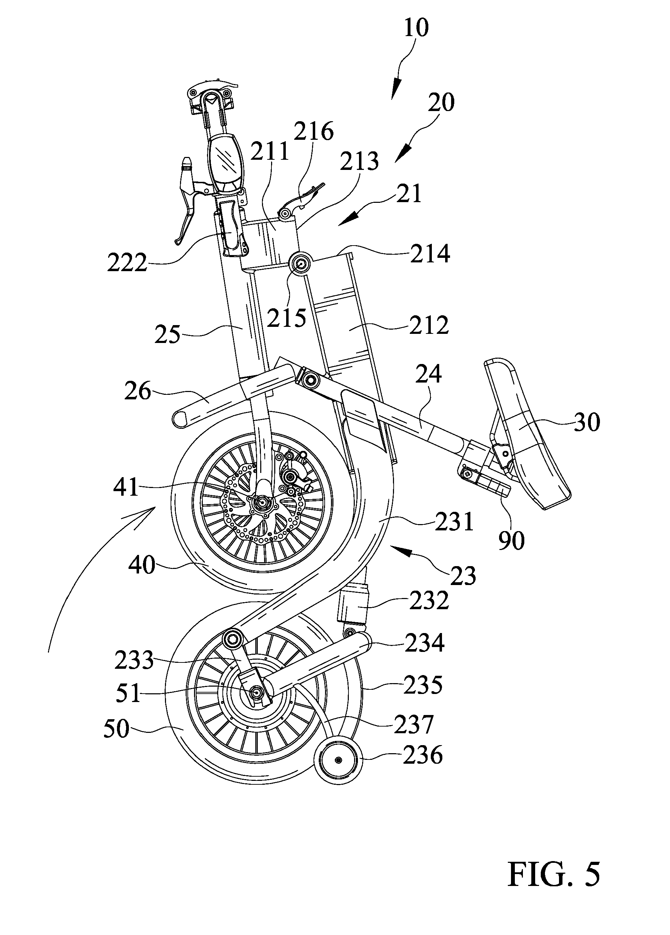

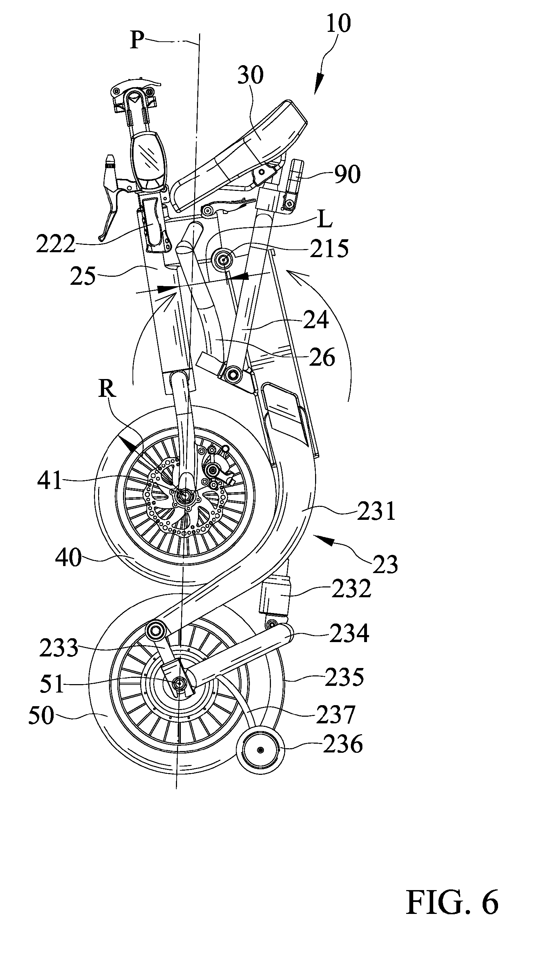

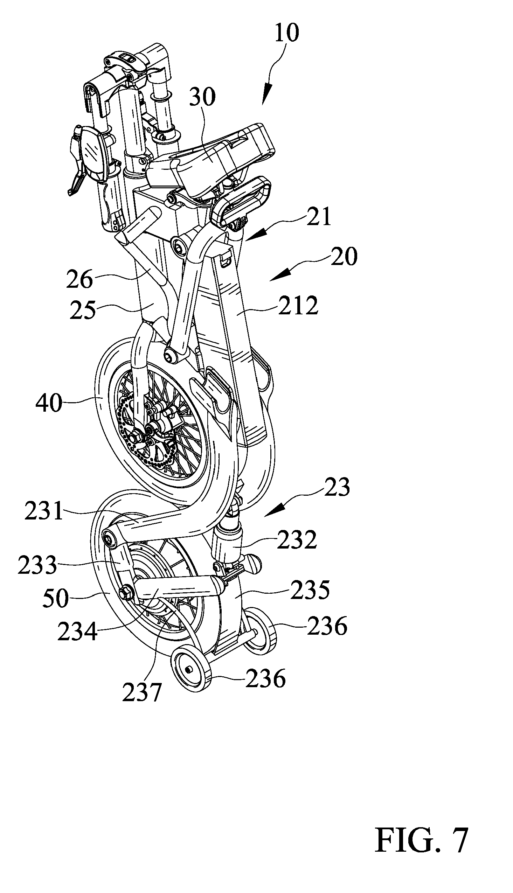

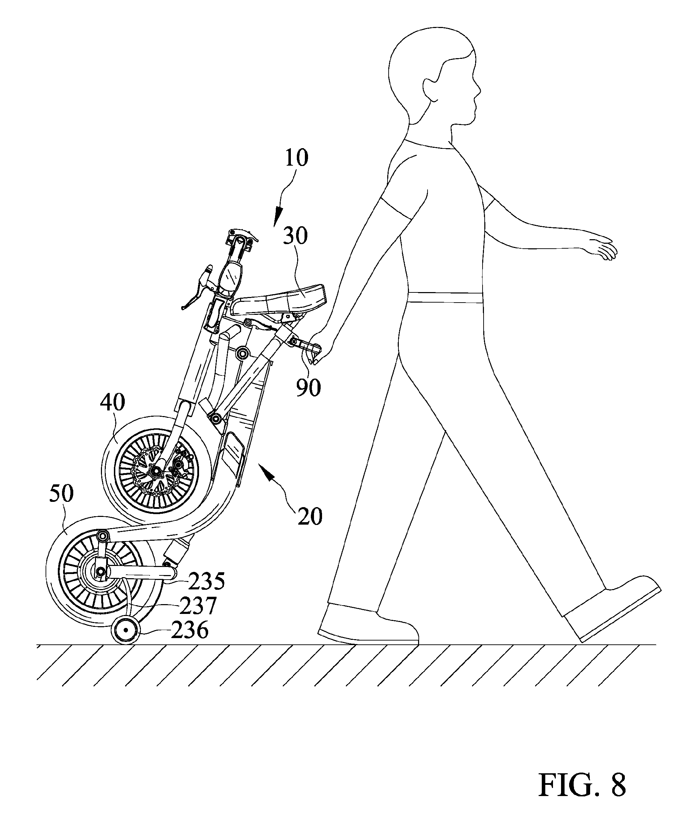

Figs 1 through 8 show a folding vehicle 10 in accordance with a first embodiment of the present invention. The folding vehicle 10 has a frame 20. The frame 20 includes a front frame extension 21, a rear frame extension 23, a seat tube 24, and a head tube 25. The front frame extension 21 has folded and unfolded positions and includes a first front frame extension section 211 and a second front frame extension section 212 pivotally connecting to the first front frame extension section 211. The front frame extension 21 includes the first and second front frame extension sections 211 and 212 in the unfolded position thereof having a first front frame extension length and in the folded position thereof having a second front frame extension length, which is smaller than the first front frame extension length. The first and second front frame extension sections 211 and 212 are pivotal about a pivot axis 215. The front frame extension 211 in the unfolded position thereof includes the first and second front frame extensions 211 and 212 in a surface contact, with the first front frame extension 211 including a first abutting edge 213 and the second front frame extension 212 including a second abutting edge 214, and with the first and second abutting edges 213 and 214 abutting one another. The front frame extension 211 in the folded position thereof includes the first and second front frame extensions 211 and 212 pivoted to a relative position the first and second abutting edges 213 and 214 disengage from one another. The front frame extension 211 in the unfolded position thereof includes the first and second front frame extensions 211 and 212 prevented from pivoting relative to one another by a lock device 216. The locking device 216 has a male lock mechanism disposed on one of the first and front frame extensions 211 and 212 and a female lock mechanism disposed on the other of the first and front frame extensions 211 and 212, respectively. The front frame extension 211 in the unfolded position thereof includes the male and female lock mechanisms engaging with one another. The front frame extension 211 in the folded position thereof includes the male and female lock mechanisms disengage from one another. The male lock mechanism is a latch hinging to the first front frame extension 211. The female lock mechanism is a catch fixedly disposed on the second front frame extension 212. The front frame extension 21 extends between the head tube 25 and the rear frame extension 23. The rear frame extension 23 extends from the second front frame extension section 212. The rear frame extension 23 is configured to include a structure 231 extending from the second front frame extension section 212. The structure 231 of the rear frame extension 23 includes a pair of structural extensions disposed parallel to and space from one another. The rear frame extension 23 pivotally connects to a first support structure 233. The structure 231 of the rear frame extension section 23 extends between the second front frame extension section 212 and the first support structure 233 and has a first end connecting to the second front frame extension section 212 and a second end connecting to the first support structure 233, respectively. The first support structure 233 includes a pair of structural members disposed parallel to and space from one another. The first support structure 233 pivotally connects to a second support structure 234. The second support structure 234 includes a pair of structural members disposed parallel to and space from one another. The first support structure 233 interconnects and extends between the rear frame extension 23 and the second support structure 234. A shocking absorbing device 232 connects to the rear frame extension 23. The shock absorbing device 232 includes the first end thereof disposed between the first and second ends of the structure 231 of the rear frame extension section 23. The structure 231 of the rear frame extension 23 and the second support structure 234 include the shock absorbing device 232 connecting therebetween. The shock absorbing device 232 includes the first end thereof disposed between the pair of structural extensions of the structure 231 of the rear frame extension 23 and the second end thereof disposed between the pair of structural members of the second support structure 234, respectively. The shock absorbing device 232 includes the first end thereof connecting to a first strut extending between the pair of structural extensions of the structure 231 of the rear frame extension 23 and a second strut extending between the pair of structural members of the second support structure 234, respectively. The rear frame extension 23 includes a protrusion 237 extending therefrom. The front frame extension 21 in the folded position thereof includes the protrusion 237 disposed on the first side of and offsetting from a phantom plane P. The seat tube 24 has folded and unfolded positions. The seat tube 24 pivotally connects to the front frame extension 21. The seat tube 24 in the unfolded position thereof has a seat connecting end disposed adjacent to the rear frame extension 23. The seat tube 24 in the folded position thereof has the seat connecting end disposed adjacent to the head tube 25. The head tube 25 extends from the first front frame extension section 211 and spaces from the pivot axis 215 at a first distance L. The head tube 25 pivotally connects to a steering mechanism 22. The steering mechanism 22 includes a rolling device connecting structure 221 and a steering handle extending outward from two opposite ends of the head tube 25. The rolling device connecting structure 221 is in a form of a fork. The steering handle and the rolling device connecting structure 221 connect together. The steering handle and the rolling device connecting structure 221 are adapted to be turned synchronously and rotate relative to the head tube 25. The steering handle has folded and unfolded positions. The steering handle includes a shaft and two handlebars 222 extending from the shaft. Each of the two handlebars 222 has unfolded position and folded position. The steering handle in the unfolded position thereof includes the two handlebars 222 having a first handlebar width. The steering handle in the folded position thereof includes the two handlebars 222 having a second handlebar width, which is smaller than the first handlebar width. The steering handle in the unfolded position thereof includes each the two handlebars 222 extended horizontally in a direction away from the shaft. The steering handle in the folded position thereof includes the two handlebars 222 collapsed and disposed side-by-side with the shaft.

The folding vehicle 10 has two footrests 26 each having folded and unfolded positions. The two footrests 26 pivotally connect to the frame 20. The two footrests 26 each in the unfolded position thereof having a distal end disposed distal from the front frame extension 21. The two footrests 26 each in the folded position thereof having the distal end disposed adjacent to the front frame extension 21.

The folding vehicle 10 has a seat 30 having folded and unfolded positions. The folding vehicle 10 pivotally connects to the seat tube 24. The seat 30 in the folded position thereof is collapsed and disposed adjacent to the seat tube 24. The seat 30 in the unfolded position thereof and the seat tube 24 are angled relative to one another with a first included angle therebetween. The seat 30 in the folded position thereof and the seat tube 24 are angled relative to one another with a second included angle therebetween. The first included angle is greater than the second included angle

The folding vehicle 10 has two rolling devices, a front rolling device 40 and a rear rolling device 50. The front rolling device 40 pivotally connects to the rolling device connecting structure 221 and is pivotal about a pivot axis 41 and has a radius R. The first distance L is smaller than the radius R. The rear rolling device 50 pivotally connects to the rear frame extension 23 and is pivotal about a pivot axis 51.

The front rolling device 40 is a wheel connected between two branches of the fork. The wheel has a circular contour. The rear rolling device 50 pivotally connects to the first and second support structures 233 and 234. The real rolling device 50 is disposed between the pair of structural extensions of the structure 231 of the rear frame extension 23, the pair of structural members of the first support structure 233, and the pair of structural members of the second support structure 234. The rear rolling device 50 includes a wheel. The wheel has a circular contour.

The folding vehicle 10 has a mud fender 235 disposed above and spaces from the rear rolling device 50. The mud fender 235 connects to the rear frame extension 23. The mud fender 235 connects to the second strut extending between the pair of structural members of the second support structure 234.

The folding vehicle 10 has an auxiliary rolling device 236 connecting to the rear frame extension 23. The auxiliary rolling device 236 includes two auxiliary rolling members. The auxiliary rolling members pivotally connect the protrusion 237. The auxiliary rolling members are pivotal about a pivot axis. The pivot axis of the auxiliary rolling members offsets from the pivot axis 51 at a distance greater than a radius of the rear rolling device 50. A radius of each of auxiliary rolling members of the auxiliary rolling devices 236 is smaller than the radius of the rear rolling device 50. The front frame extension 21 in the folded position thereof includes the axis 215 and the pivot axis of the auxiliary rolling members disposed on the first side of and offsetting from a phantom plane P. The folding vehicle 10 in the folded position thereof is adapted to be easily and stably transported on a surface by the auxiliary rolling members and including the auxiliary rolling members movably abutting the surface. The folding vehicle 10 in the folded position thereof includes the two auxiliary rolling members not disposed within a circumferential edge of the rear rolling device 50 so as to contact the surface when the folding vehicle 10 is transported and the rear rolling device 50 disposed between the two auxiliary rolling members. The folding vehicle 10 in the unfolded position thereof includes the pivot axis 215 disposed at a height higher than the pivot axis of the auxiliary rolling members. The folding vehicle 10 in the unfolded position thereof includes the pivot axis of the auxiliary rolling members disposed at a height higher than the pivot axis 51.

The front frame extension 21 in the folded position thereof includes a handle 90 disposed on the first side of and offsetting from the phantom plane P. The folding vehicle 10 in the folded position thereof is adapted to be easily and stably transported by towing from the handle 90.

The front frame extension 21 in the folded position thereof includes the first, second and third pivot axes 215, 41, and 51 not aligned with one another, and the second and third pivot axes 41 and 51 disposed on the phantom plane P, as well as the first pivot axis 215 offsetting from the phantom plane P and disposed on a first side of the phantom plane P that is adjacent to the second front frame extension section 212 and distal to the head tube 25 which is disposed on a second side of the phantom plane P. When viewing in a direction that only a distal end of the pivot axis 215 is shown, it is noted that the pivot axes 215, 41, and 51 are not aligned and parallel with one another. The first and second front frame extension sections 211 and 212, the front rolling device 40, the rear rolling device 50, the seat tube 24, and the seat 30 are pivotal in respective planes which are parallel to one another which is opposite to the first side.

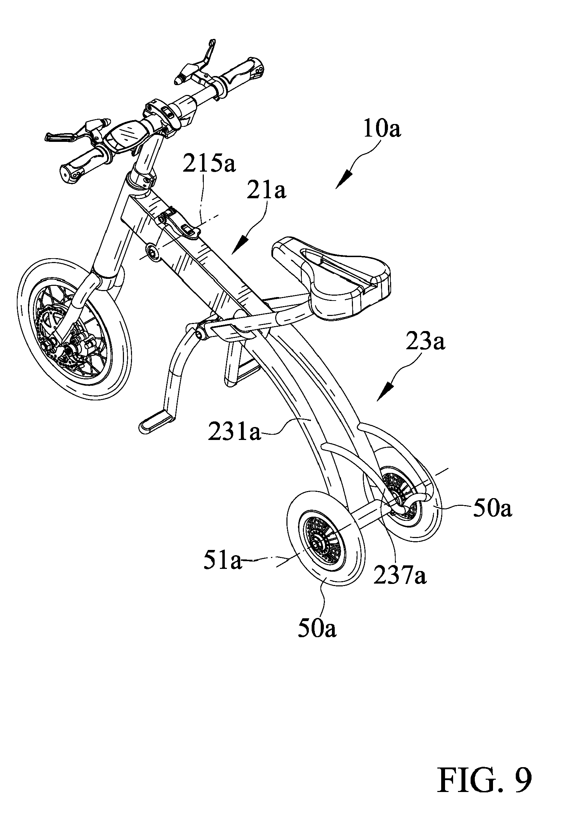

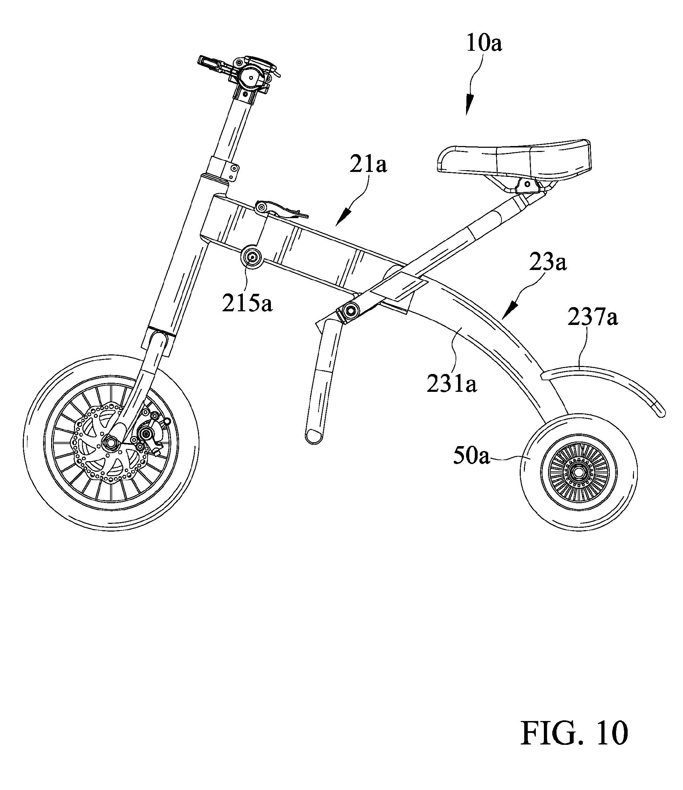

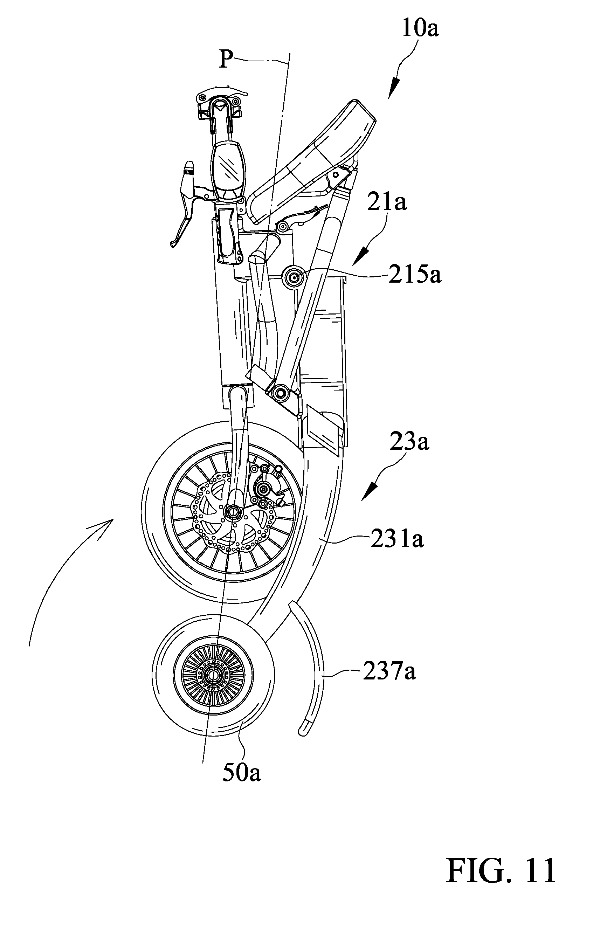

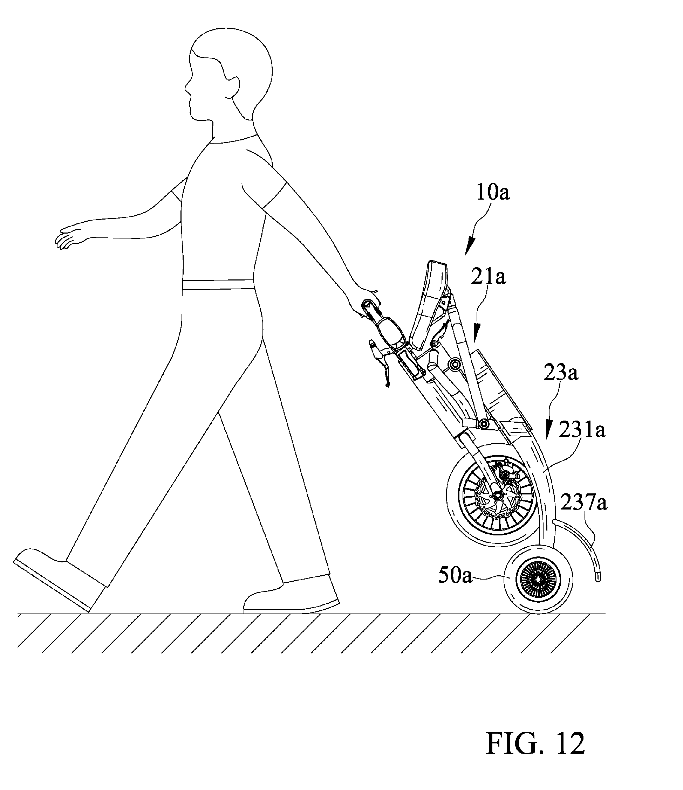

Figs. 9 through 12 show a folding vehicle 10a in accordance with a second embodiment of the present invention. The folding vehicle 10a is similar to the folding vehicle 10 except that a rear rolling device 50a includes two rolling members and a protrusion 237a extends from a rear frame extension 23a. Likewise, the rear frame extension 23a is configured to include a structure 231 a including a pair of structural extensions disposed parallel to and space from one another. The two rolling members are pivotal about a pivot axis 51a. The folding vehicle 10a in the folded position thereof is adapted to be easily and stably transported on a surface by the two rolling members and including the two rolling members movably abutting the surface. The rear rolling device 50a includes two wheels. Each of the two wheels has a circular contour. Likewise, a front frame extension section 21a has a pivot axis 215a. The front frame extension 21a in the folded position thereof includes the protrusion 237a disposed on the first side of and offsetting from a phantom plane P. The folding vehicle 10a in the folded position thereof is adapted to be supported upright stably on the surface by the protrusion 237a and includes the protrusion 237a abutting the surface.

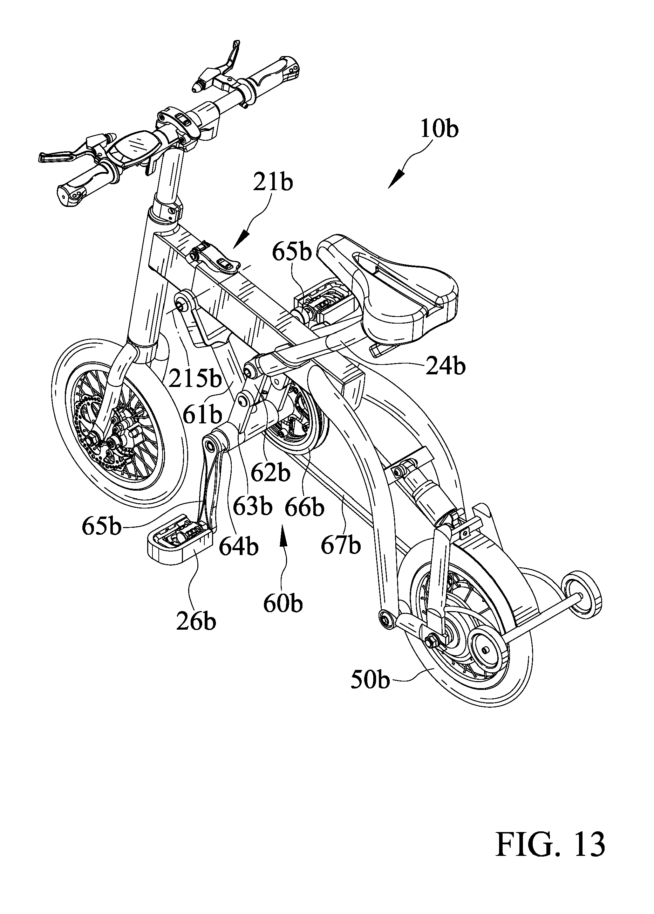

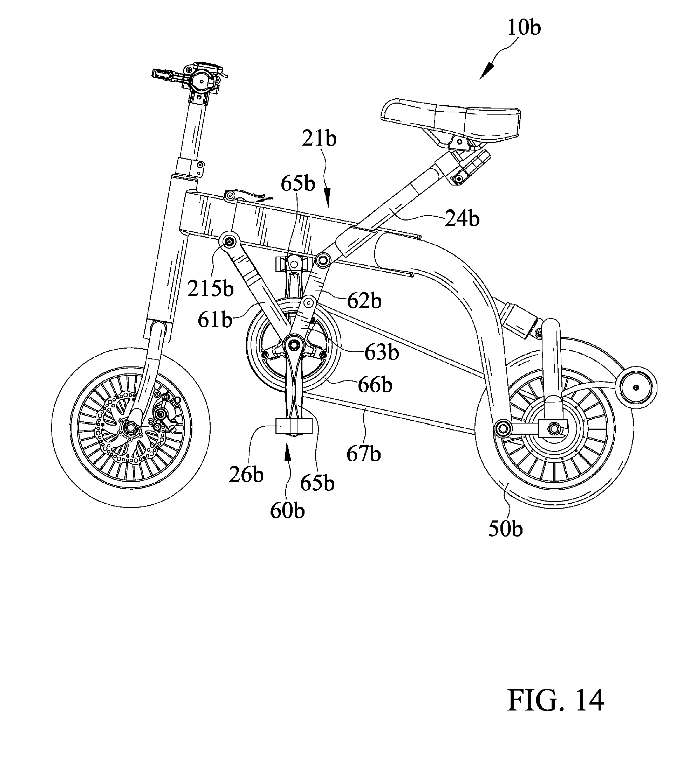

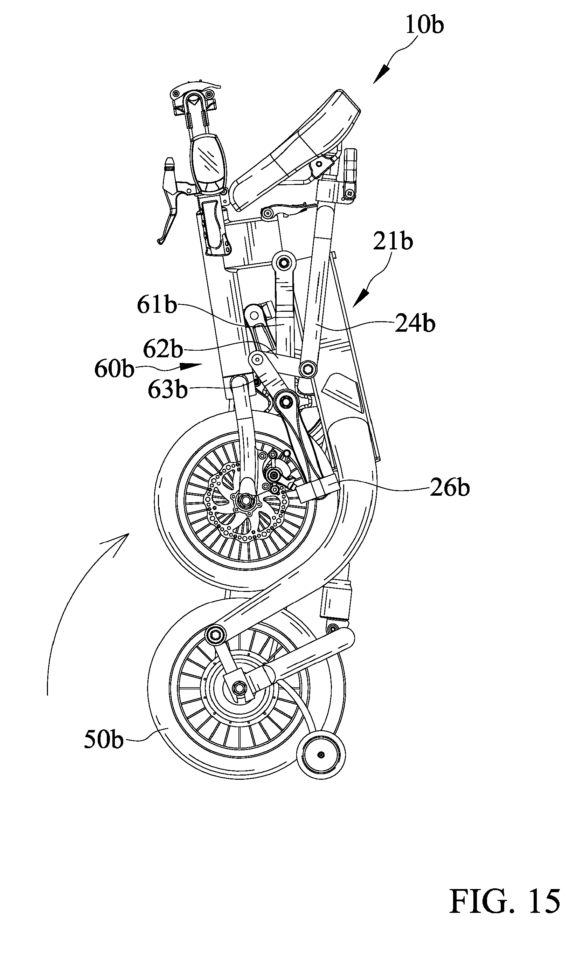

Figs. 13 through 15 show a folding vehicle 10b in accordance with a third embodiment of the present invention. The folding vehicle 10b is similar to the folding vehicle 10 except that a frame includes a transmission mechanism 60b connecting thereto. The transmission mechanism 60b includes a drive axle 64b, a crank device 65b, a drive ring 66b, and a drive link 67b connecting together. The drive axle 64b interconnects and extends between the crank device 65b and the drive ring 66b. The drive link 67b interconnects and extends between the drive ring 66b and one of the front rolling device 40 and a rear rolling device 50b. The transmission mechanism 60b includes a housing in which the drive axle 64b is received. The drive axle 64b is rotatable relative to the housing. The crank device 65b and the drive ring 66b are disposed outside the housing. The crank device 65b includes two crank members. Each of the two crank members of the crank device 65b connects to one of two footrests 26b. The drive link 67b may be a belt drive or a chain drive. The drive link 67b interconnects and extends between the driving ring 66b and the rear rolling device 50b. The transmission mechanism 60b includes first, second, and third linkages 61b, 62b, and 63b extending between and interconnecting the housing and the frame 20. Likewise, a front frame extension section 21b has a pivot axis 215b. The first linkage 61b pivotally connects to a front frame extension 21b and is pivotal about the first pivot axis 215b. The first linkage 61b includes a first end thereof pivotally connecting to the front frame extension 21b and a second end thereof extending to the housing, respectively. The second linkage 62b includes a first end thereof pivotally connecting to a seat tube 24b and a second end thereof pivotally connecting to a first end of the third linkage 63b, respectively. The third linkage 63b includes a second end thereof extending to the housing.

In view of the forgoing, the folding vehicles 10, 10a, and 10b in the folded position thereof include the respective front frame extensions 21, 21a, and 21b, the seat tubes 24 and 24b, and the seats 30 folded to their folded positions. The front frame extensions 21, 21a, and 21b in the folded position thereof include the respective first, second and third pivot axes 215, 215a, 215b, 41, and 51 not aligned with one another, the respective second and third pivot axes 41 and 51 disposed on the phantom plane P, as well as the respective first pivot axis 215, 215a, and 215b offsetting from the phantom plane P and disposed on a first side of the phantom plane P that is adjacent to the second front frame extension section 212 and distal to the head tube 25 which is disposed on a second side of the phantom plane P.

## Claims

1. A folding vehicle (10, 10a, 10b) has folded and unfolded positions comprising:
a frame (20) including a front frame extension (21, 21a, 21b), a rear frame extension (23, 23a), a seat tube (24, 24b), and a head tube (25), with the front frame extension (21, 21a, 21b) having folded and unfolded positions and including a first front frame extension section (211) and a second front frame extension section (212) pivotally connecting to the first front frame extension section (211), with the first and second front frame extension sections (211, 212) being pivotal about a first pivot axis (215, 215a, 215b), with the head tube (25) extending from the first front frame extension section (211) and spacing from the first pivot axis (215, 215a, 215b) at a first distance (L), with the rear frame extension (23, 23a) extending from the second front frame extension section (212);
a steering mechanism (22) pivotally connecting to the head tube (25), with the steering mechanism (22) including a rolling device connecting structure (221) and a steering handle;
a seat (30) pivotally connecting to the seat tube (24, 24b);
a front rolling device (40) pivotally connecting to the rolling device connecting structure (221) and being pivotal about a second pivot axis (41) and having a radius (R), with the first distance (L) smaller than the radius (R); and
a rear rolling device (50, 50a, 50b) pivotally connecting to the rear frame extension (23, 23a) and being pivotal about a third pivot axis (51);
wherein the front frame extension (21, 21a, 21b) in the folded position thereof includes the first, second and third pivot axis (215, 215a, 215b, 41, 51) not aligned with one another, the second and third pivot axis (41, 51) disposed on a phantom plane (P), as well as the first pivot axis (215, 215a, 215b) offsetting from the phantom plane (P) and disposed on a first side of the phantom plane (P) that is adjacent to the second front frame extension section (212) and distal to the head tube (25) which is disposed on a second side of the phantom plane (P) which is opposite to the first side.

2. The folding vehicle (10, 10b) as claimed in claim 1 further comprising an auxiliary rolling device (236) connecting to the rear frame extension (23), wherein the auxiliary rolling device (236) includes two auxiliary rolling members, wherein the folding vehicle (10, 10b) in the folded position thereof is adapted to be easily and stably transported on a surface by the auxiliary rolling members and includes the auxiliary rolling members movably abutting the surface, wherein the auxiliary rolling members are pivotal about a fourth pivot axis, and wherein the folding vehicle (10, 10b) in the folded position thereof includes the two auxiliary rolling members not disposed within a circumferential edge of the rear rolling device (50, 50b) so as to contact the surface when the folding vehicle (10, 10b) is transported.

3. The folding vehicle (10, 10b) as claimed in claim 2, wherein the rear frame extension (23) includes a protrusion (237) extending therefrom, wherein the front frame extension (21, 21b) in the folded position thereof includes the protrusion (237) disposed on the first side of and offsetting from the phantom plane (P), and wherein the auxiliary rolling members pivotally connect the protrusion (237).

4. The folding vehicle (10a) as claimed in claim 1, wherein the rear rolling device (50a) includes two rolling members, wherein the two rolling members are pivotal about a third pivot axis (51a), and wherein the folding vehicle (10a) in the folded position thereof is adapted to be easily and stably transported on a surface by the two rolling members and includes the two rolling members movably abutting the surface.

5. The folding vehicle (10a) as claimed in claim 4, wherein the rear frame extension (23a) includes a protrusion (237a) extending therefrom, and wherein the front frame extension (21a) in the folded position thereof includes the protrusion (237a) disposed on the first side of and offsetting from the phantom plane (P), and wherein the folding vehicle (10a) in the folded position thereof is adapted to be supported upright stably on the surface by the protrusion (237a) and includes the protrusion (237a) abutting the surface.

6. The folding vehicle (10, 10b) as claimed in claims 2 or 3, wherein the front frame extension (21, 21a, 21b) in the folded position thereof includes the first axis (215) and the fourth pivot axis disposed on the first side of and offsetting from the phantom plane (P), wherein the folding vehicle (10, 10b) in the unfolded position thereof includes the first pivot axis (215) disposed at a height higher than the fourth pivot axis, and wherein the folding vehicle (10, 10b) in the unfolded position thereof includes the fourth pivot axis disposed at a height higher than the third pivot axis (51).

7. The folding vehicle (10, 10b) as claimed in any of claims 2, 3 and 6, wherein the fourth pivot axis offsets from the third pivot axis (51) at a distance greater than a radius of the rear rolling device (50).

8. The folding vehicle (10, 10b) as claimed in any of claims 1, 2, 3, 6, and 7, wherein the front frame extension (21, 21a, 21b) in the folded position thereof includes a handle (90) disposed on the first side of and offsetting from the phantom plane (P), and wherein the folding vehicle (10, 10b) in the folded position thereof is adapted to be easily and stably transported by towing from the handle (90).

9. The folding vehicle (10) as claimed in any of claims 1, 2, 3, 6, 7, and 8 further comprising a shocking absorbing device (232) connecting to the rear frame extension (23).

10. The folding vehicle (10) as claimed in claim 9, wherein the rear frame extension (23) is configured to include a structure (231) extending from the second front frame extension section (212), wherein the rear frame extension (23) pivotally connects to a first support structure (233), wherein the first support structure (233) pivotally connects to a second support structure (234), wherein the first support structure (233) interconnects and extends between the rear frame extension (23) and the second support structure (234), wherein the structure (231) of the rear frame extension (23) and the second support structure (234) include the shock absorbing device (232) connecting therebetween, and wherein the rear rolling device (50) pivotally connects to the first and second support structures (233, 234).

11. The folding vehicle (10, 10a, 10b) as claimed in any of claims 1 through 10 further comprising two footrests (26, 26b) each having folded and unfolded positions, wherein the two footrests (26, 26b) pivotally connect to the frame (20), wherein the two footrests (26, 26b) each in the unfolded position thereof have a distal end disposed distal from the front frame extension (21, 21a, 21b), and wherein the two footrests (26, 26b) each in the folded position thereof have the distal end disposed adjacent to the front frame extension (21, 21a, 21b).

12. The folding vehicle (10b) as claimed in any of claims 1, 2, 3, 6, 7, 8, 9, and 10 further comprising a transmission mechanism (60b) connecting to the frame (20), wherein the transmission mechanism (60b) includes a drive axle (64b), a crank device (65b), a drive ring (66b), and a drive link (67b) connecting together, wherein the drive axle (64b) interconnects and extends between the crank device (65b) and the drive ring (66b), wherein the drive link (67b) interconnects and extends between the drive ring (66b) and one of the front and rear rolling device (50b).

13. The folding vehicle (10, 10b) as claimed in any of claims 1 through 12, wherein the seat tube (24, 24b) has folded and unfolded positions, wherein the seat tube (24, 24b) pivotally connects to the front frame extension (21, 21a, 21b), wherein the seat tube (24, 24b) in the unfolded position thereof has a seat connecting end disposed adjacent to the rear frame extension (23,23a), and wherein the seat tube (24, 24b) in the folded position thereof has the seat connecting end disposed adjacent to the head tube (25).

14. The folding vehicle (10, 10b) as claimed in any of claims 1 through 13 further comprising a mud fender (235) disposed above and spaces from the rear rolling device (50, 50b), and wherein the mud fender (235) connects to the rear frame extension (23).

15. The folding vehicle (10, 10b) as claimed in any of claims 1 through 14, wherein the first and second front frame extension sections (211, 212), the front rolling device (40), the rear rolling device (50, 50a, 50b), the seat tube (24, 24b), and the seat (30) are pivotal in respective planes which are parallel to one another.
